# EUROPEAN PATENT APPLICATION

(11) **EP 4 516 150 A1**
(43) Date of publication of application: **05.03.2025**
(21) Application number: 23794821.1
(22) Date of filing: 15.03.2023
(51) Int. Cl.: A44B 11/16

(54) **ROPE FASTENER**

(30) Priority: 28.04.2022 CN 202221043779 U
(71) Applicant: Duraflex Hong Kong Limited, Central, Sheung Wan, Hong Kong (HK)
(72) Inventor: LIN, Pochu, Taipei, Taiwan 11491 (TW)
(74) Representative: Dantz, Jan Henning
(86) International application number: PCT/CN2023/081495
(87) International publication number: WO 2023/207385

(57) **Abstract**

A rope fastener, comprising a base body (100) and a fastening member (200). A sliding channel (160) is formed on the base body (100), and the sliding channel (160) is provided with a first opening (161); two side walls (120) located on two sides of the sliding channel (160) on the base body (100) gradually become closer to each other towards the first opening (161); a support portion (140) is formed in the sliding channel (160) of the base body (100); and the fastening member (200) is slidably arranged in the sliding channel (160). The rope fastener further comprises a spring (300), which is arranged in the sliding channel (160), is located between the support portion (140) and the fastening member (200), and is supported on the support portion (140) to cause, by the elastic force thereof, the fastening member (200) to apply force to the two side walls (120), so as to fasten a rope (400) located between the fastening member (200) and the side walls (120). By means of the first opening (161), the two ends of the stroke of the sliding channel (160) are not completely closed, such that the sliding stroke of the fastening member (200) in the base body (100) is increased, thereby yielding a relatively large space to adapt to various ropes (400), and further simplifying the assembly of the rope fastener.

## Description

### Technical Field

The utility model relates to the field of accessories, and particularly to a rope fastener.

### Background

In an existing rope wedge structure, a rope slides and drives a reel or wedge block to slide towards a narrow area in a sliding channel, causing a wall surface of the narrow area to back press the rope itself until they cannot move relative to each other. In the long process of improving the rope wedge structure, although there may be slight changes in the form of the rope wedge structure, its basic structure remains unchanged.

In various rope wedge structures, a sliding stroke of the sliding channel is closed at both ends, so that the stroke is short, and only specially designed small ropes can be used, which cannot adapt to a variety of ropes.

### Summary

The utility model proposes a rope fastener to address the above technical issues.

The utility model proposes the following technical solution:
The utility model proposes a rope fastener, including a base body and a fastening member.

A sliding channel is formed on the base body, and the sliding channel is provided with a first opening. Two side walls located on both sides of the sliding channel on the base body gradually become closer to each other towards the first opening.

A support portion is formed in the sliding channel of the base body. The fastening member is slidably arranged in the sliding channel.

The rope fastener further includes a spring, which is arranged in the sliding channel, is located between the support portion and the fastening member, and is supported on the support portion to cause, by the elastic force thereof, the fastening member to apply force to the two side walls, so as to fasten a rope located between the fastening member and the side walls.

In the above rope fastener of the utility model, the base body further includes a bottom, and the two side walls are respectively arranged on two sides of the bottom.

The base body further includes a top that is arranged opposite to the bottom at an interval and connected to the two side walls respectively. The support portion is located between the two side walls and connected to the bottom and the top respectively.

The sliding channel is enclosed by the bottom, the top, the support portion, and the two side walls. The first opening is enclosed by the bottom, the top, and the two side walls. The sliding channel is further provided with a second opening and a third opening. The second opening is enclosed by the bottom, the top, and one side wall. The third opening is enclosed by the bottom, the top, and the other side wall.

The sliding channel is used for two ropes to pass through, with one rope passing through the first opening and the second opening respectively, and the other rope passing through the first opening and the third opening respectively.

In the above rope fastener of the utility model, the fastening member includes a base and two fastening portions respectively formed on the bottom of the base. The two fastening portions are arranged opposite each other and enclose, together with the base, an accommodating groove for accommodating the spring. The fastening member further includes a blocking portion formed on the base and located in the accommodating groove for the spring to apply force.

In the above rope fastener of the utility model, the fastening portion has engaging teeth.

In the above rope fastener of the utility model, a linear notch is formed at the top, and the base is slidably arranged in the linear notch.

A push cover is further formed on the top of the base.

In the above rope fastener of the utility model, the base body further includes a linear clamping portion formed on the bottom and located in the sliding channel.

An extension direction of the clamping portion is consistent with an extension direction of the linear notch.

The fastening member is fitted with the clamping portion through the accommodating groove, so as to be slidably arranged on the clamping portion; and the blocking portion is in contact with the clamping portion.

In the above rope fastener of the utility model, two sliding rails are formed on a wall surface of the top located outside the sliding channel, and the two sliding rails are respectively arranged on two sides of the linear notch.

Two sliding grooves are formed on a bottom surface of the push cover. The two sliding grooves are respectively formed at two sides of the base. The sliding grooves correspond one-to-one to the sliding rails, and the sliding rails are relatively slidably arranged in the sliding grooves.

In the above rope fastener of the utility model, two tenons are further formed on the wall surface of the top located outside the sliding channel. The two tenons are respectively arranged on the two sides of the linear notch.

Two fastening positions are provided on the push cover. The two fastening positions are arranged respectively on the two sides of the base. The fastening positions correspond one-to-one to the tenons, and the tenons are detachably fastened at the corresponding fastening positions.

For the rope fastener of this application, by means of the first opening, the two ends of the stroke of the sliding channel are not completely closed, such that the sliding stroke of the fastening member in the base body is increased, thereby yielding a relatively large space to adapt to various ropes, and further simplifying the assembly of the rope fastener of this application. At the same time, the rope fastener of this application adopts the fit of the fastening positions and the tenons outside the sliding channel, which completely does not occupy the space of the sliding channel. In addition, the rope fastener of this application also improves the tensile resistance through the bag mouth-type base body, thereby successfully compensating for the reduced strength caused by the forming of the first opening, and also enhancing the stability of the entire rope fastener.

### Brief Description of the Drawings

The utility model is further illustrated below with reference to the accompanying drawings:
FIG. 1 shows a schematic structural diagram of a rope fastener according to a preferred embodiment of the utility model;
FIG. 2 shows a schematic exploded diagram of the rope fastener shown in FIG. 1;
FIG. 3 shows another schematic exploded diagram of the rope fastener shown in FIG. 1;
FIG. 4 shows a schematic structural diagram of a base body of the rope fastener shown in FIG. 1;
FIG. 5 shows a schematic structural diagram of a fastening member of the rope fastener shown in FIG. 1;
FIG. 6 shows a reference diagram of a usage state of the rope fastener shown in FIG. 1; and
FIG. 7 shows a reference diagram of another usage state of the rope fastener shown in FIG. 1.

### Detailed Description

In order to make the technical solution, technical purpose, and technical effect of the utility model clearer, so that those skilled in the art can understand and implement the utility model, a further detailed description of the utility model will be provided below with reference to the accompanying drawings and specific embodiments.

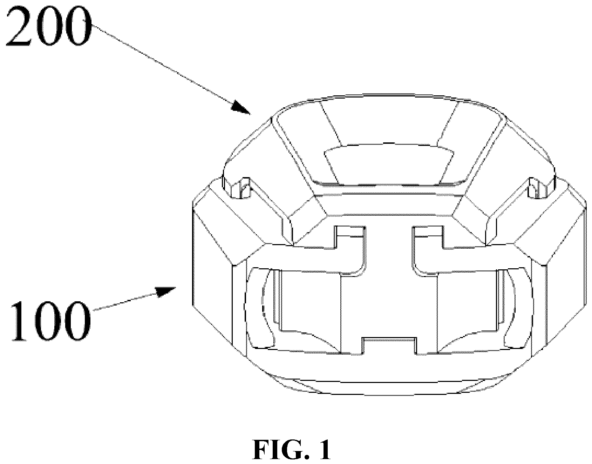

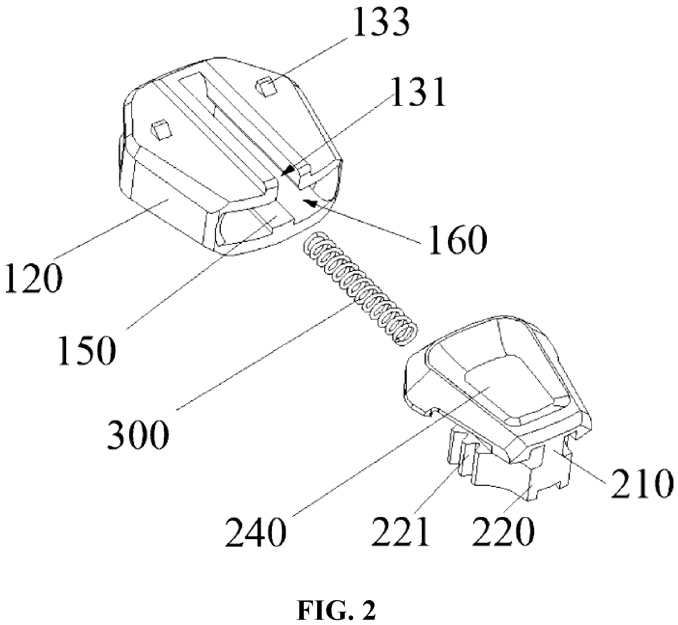

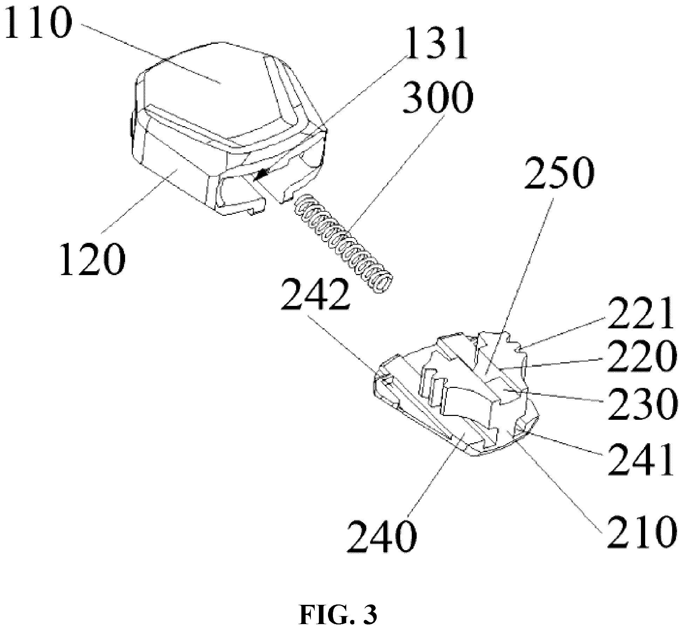

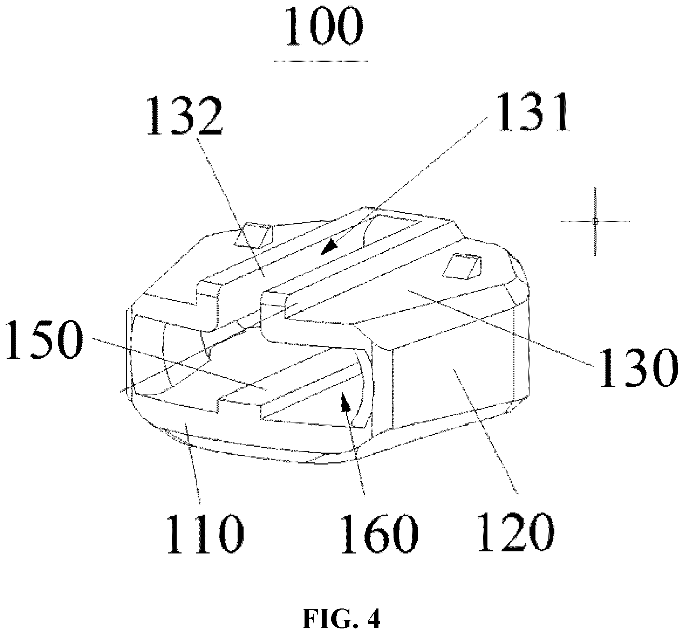

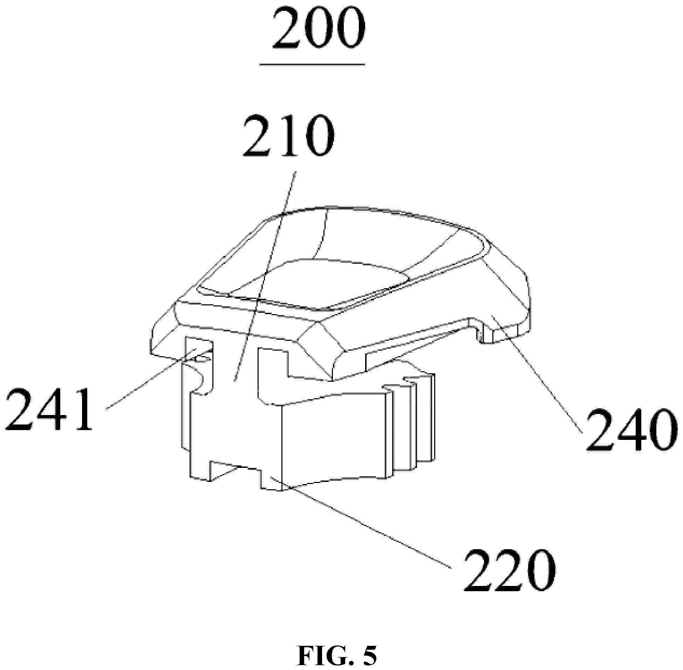

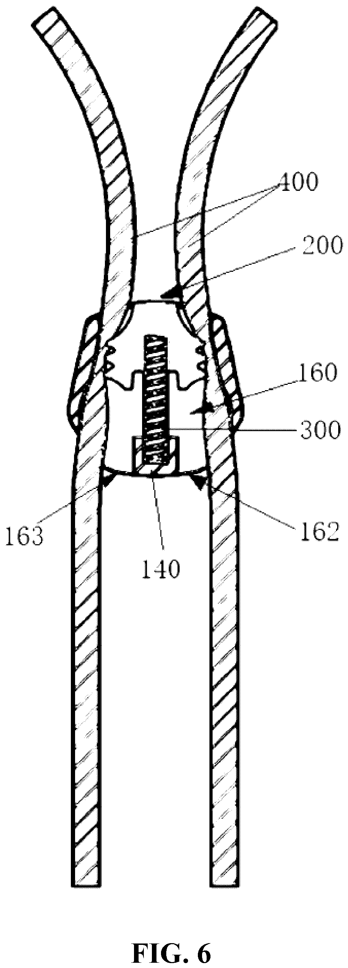

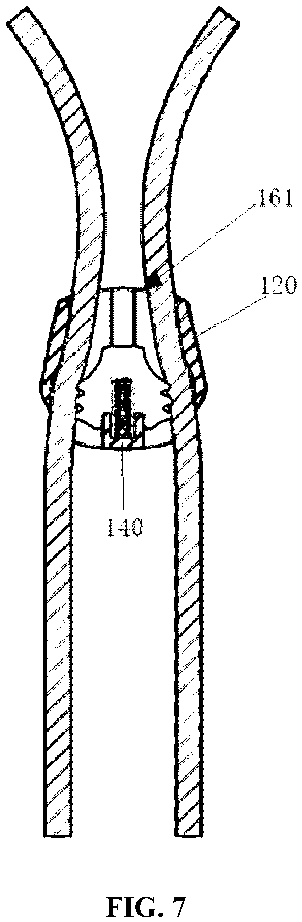

As shown in FIG. 1 to FIG. 7, FIG. 1 shows a schematic structural diagram of a rope fastener according to a preferred embodiment of the utility model; FIG. 2 shows a schematic exploded diagram of the rope fastener shown in FIG. 1; FIG. 3 shows another schematic exploded diagram of the rope fastener shown in FIG. 1; FIG. 4 shows a schematic structural diagram of a base body of the rope fastener shown in FIG. 1; FIG. 5 shows a schematic structural diagram of a fastening member of the rope fastener shown in FIG. 1; FIG. 6 shows a reference diagram of a usage state of the rope fastener shown in FIG. 1; and FIG. 7 shows a reference diagram of another usage state of the rope fastener shown in FIG. 1. The rope fastener includes a base body 100 and a fastening member 200.

A sliding channel 160 is formed on the base body 100, and the sliding channel 160 is provided with a first opening 161. Two side walls 120 located on both sides of the sliding channel 160 on the base body 100 gradually become closer to each other towards the first opening 161.

A support portion 140 is formed in the sliding channel 160 of the base body 100. The fastening member 200 is slidably arranged in the sliding channel 160.

The rope fastener further includes a spring 300, which is arranged in the sliding channel 160, is located between the support portion 140 and the fastening member 200, and is supported on the support portion 140 to cause, by the elastic force thereof, the fastening member 200 to apply force to the two side walls 120, so as to fasten a rope 400 located between the fastening member 200 and the side walls 120.

The above technical solution is a basic solution. When the spring 300 is compressed, the fastening member 200 slides in a direction away from the first opening 161, forming gaps with the two side walls 120 respectively. At this time, the rope 400 can slide. When the spring 300 starts to stretch, the fastening member 200 may approach the two side walls 120 respectively, thereby applying force to the two side walls 120 to fasten the rope 400 located between the fastening member 200 and the side walls 120, achieving the basic function of the rope fastener. In this embodiment, the base body 100 is in the form of a bag mouth.

Furthermore, in this embodiment, as shown in FIG. 4, FIG. 6, and FIG. 7, the base body 100 further includes a bottom 110, and the two side walls 120 are respectively arranged on two sides of the bottom 110.

The base body 100 further includes a top 130 that is arranged opposite to the bottom 110 at an interval and connected to the two side walls 120 respectively. The support portion 140 is located between the two side walls 120 and connected to the bottom 110 and the top 130 respectively.

The sliding channel 160 is enclosed by the bottom 110, the top 130, the support portion 140, and the two side walls 120. The first opening 161 is enclosed by the bottom 110, the top 130, and the two side walls 120. The sliding channel 160 is further provided with a second opening 162 and a third opening 163. The second opening 162 is enclosed by the bottom 110, the top 130, and one side wall 120. The third opening 163 is enclosed by the bottom 110, the top 130, and the other side wall 120.

The sliding channel 160 is used for two ropes 400 to pass through, with one rope 400 passing through the first opening 161 and the second opening 162 respectively, and the other rope 400 passing through the first opening 161 and the third opening 163 respectively.

Here, as the two side walls 120 gradually become closer to each other towards the first opening 161, the interior of the sliding channel 160 gradually narrows towards the first opening 161. Here, the top, the bottom, and the side do not imply any limitation to the structural features, but are only for the convenience of describing the positional relationship between various structures, and do not serve as a limitation to the scope of this application.

Furthermore, as shown in FIG. 2 and FIG. 5, the fastening member 200 includes a base 210 and two fastening portions 220 respectively formed on the bottom of the base 210. The two fastening portions 220 are arranged opposite each other and enclose, together with the base 210, an accommodating groove 250 for accommodating the spring 300. The fastening member 200 further includes a blocking portion 230 formed on the base 210 and located in the accommodating groove 250 for the spring 300 to apply force.

Here, the spring 300 is prevented from slipping out of the sliding channel 160 by the accommodating groove 250. Meanwhile, the fastening portions 220 correspond one-to-one to the side walls 120. Under the action of the own elastic force of the spring, the fastening portions 220 and the corresponding side walls 120 can fasten the rope 400 in between.

Furthermore, in this embodiment, as shown in FIG. 2, FIG. 6, and FIG. 7, the fastening portion 220 has engaging teeth 221. By using the engaging teeth 221, the friction between the fastening portion 220 and the rope 400 can be increased when the fastening portion 220 is in contact with the rope 400.

Furthermore, a linear notch 131 is formed at the top 130, and the base 210 is slidably arranged in the linear notch 131.

A push cover 240 is further formed on the top of the base 210.

Here, by operating the push cover 240, the fastening member 200 can be driven to slide in the sliding channel 160.

Furthermore, in this embodiment, as shown in FIG. 2, the base body 100 further includes a linear clamping portion 150 formed on the bottom 110 and located in the sliding channel 160.

An extension direction of the clamping portion 150 is consistent with an extension direction of the linear notch 131.

The fastening member 200 is fitted with the clamping portion 150 through the accommodating groove 250, so as to be slidably arranged on the clamping portion 150. The blocking portion 230 is in contact with the clamping portion 150.

Here, the sliding stroke of the fastening member 200 on the base body 100 can be determined by the fit between the accommodating groove 250 and the clamping portion 150 and based on the base 210 slidably arranged in the linear notch 131.

Furthermore, as shown in FIG. 2 and FIG. 6, two sliding rails 132 are formed on a wall surface of the top 130 located outside the sliding channel 160, and the two sliding rails 132 are respectively arranged on two sides of the linear notch 131.

Two sliding grooves 241 are formed on a bottom surface of the push cover 240. The two sliding grooves 241 are respectively formed on two sides of the base 210. The sliding grooves 241 correspond one-to-one to the sliding rails 132, and the sliding rails 132 are relatively slidably arranged in the sliding grooves 241.

Here, the fit between the sliding grooves 241 and the sliding rails 132 further ensures the stability of the linear sliding of the fastening member 200.

Furthermore, as shown in FIG. 2, two tenons 133 are further formed on the wall surface of the top 130 located outside the sliding channel 160. The two tenons 133 are respectively arranged on the two sides of the linear notch 131.

Two fastening positions 242 are provided on the push cover 240. The two fastening positions 242 are arranged respectively on the two sides of the base 210. The fastening positions 242 correspond one-to-one to the tenons 133, and the tenons 133 are detachably fastened at the corresponding fastening positions 242. In this embodiment, the fastening positions 242 are sliding grooves.

Here, when the fastening positions 242 are fitted and fixed with the tenons 133, the entire rope fastener is fixed to the rope 400 connected to it.

For the rope fastener of this application, by means of the first opening, the two ends of the stroke of the sliding channel are not completely closed, such that the sliding stroke of the fastening member in the base body is increased, thereby yielding a relatively large space to adapt to various ropes, and further simplifying the assembly of the rope fastener of this application. At the same time, the rope fastener of this application adopts the fit of the fastening positions and the tenons outside the sliding channel, which completely does not occupy the space of the sliding channel. In addition, the rope fastener of this application also improves the tensile resistance through the bag mouth-type base body, thereby successfully compensating for the reduced strength caused by the forming of the first opening, and also enhancing the stability of the entire rope fastener.

The embodiments of the utility model have been described above with reference to the accompanying drawings, but the utility model is not limited to the specific embodiments described above. The specific embodiments described above are only illustrative and not restrictive. Those of ordinary skill in the art can take many forms under the inspiration of the utility model without departing from the purpose of the utility model and the scope of protection of claims, all of which fall within the scope of protection of the utility model.

## Claims

1. A rope fastener, comprising a base body (100) and a fastening member (200);
wherein a sliding channel (160) is formed on the base body (100), and the sliding channel (160) is provided with a first opening (161); two side walls (120) located on both sides of the sliding channel (160) on the base body (100) gradually become closer to each other towards the first opening (161);
a support portion (140) is formed in the sliding channel (160) of the base body (100); the fastening member (200) is slidably arranged in the sliding channel (160); and
the rope fastener further comprises a spring (300), which is arranged in the sliding channel (160), is located between the support portion (140) and the fastening member (200), and is supported on the support portion (140) to cause, by the elastic force thereof, the fastening member (200) to apply force to the two side walls (120), so as to fasten a rope (400) located between the fastening member (200) and the side walls (120).

2. The rope fastener according to claim 1, wherein the base body (100) further comprises a bottom (110), and the two side walls (120) are respectively arranged on two sides of the bottom (110);
the base body (100) further comprises a top (130) that is arranged opposite to the bottom (110) at an interval and connected to the two side walls (120) respectively; the support portion (140) is located between the two side walls (120) and connected to the bottom (110) and the top (130) respectively;
the sliding channel (160) is enclosed by the bottom (110), the top (130), the support portion (140), and the two side walls (120); the first opening (161) is enclosed by the bottom (110), the top (130), and the two side walls (120); the sliding channel (160) is further provided with a second opening (162) and a third opening (163); the second opening (162) is enclosed by the bottom (110), the top (130), and one side wall (120); the third opening (163) is enclosed by the bottom (110), the top (130), and the other side wall (120); and
the sliding channel (160) is used for two ropes (400) to pass through, with one rope (400) passing through the first opening (161) and the second opening (162) respectively, and the other rope (400) passing through the first opening (161) and the third opening (163) respectively.

3. The rope fastener according to claim 2, wherein the fastening member (200) comprises a base (210) and two fastening portions (220) respectively formed on the bottom of the base (210); the two fastening portions (220) are arranged opposite each other and enclose, together with the base (210), an accommodating groove (250) for accommodating the spring (300); the fastening member (200) further comprises a blocking portion (230) formed on the base (210) and located in the accommodating groove (250) for the spring (300) to apply force.

4. The rope fastener according to claim 3, wherein the fastening portion (220) has engaging teeth (221).

5. The rope fastener according to claim 3, wherein a linear notch (131) is formed at the top (130), and the base (210) is slidably arranged in the linear notch (131); and
a push cover (240) is further formed on the top of the base (210).

6. The rope fastener according to claim 5, wherein the base body (100) further comprises a linear clamping portion (150) formed on the bottom (110) and located in the sliding channel (160);
an extension direction of the clamping portion (150) is consistent with an extension direction of the linear notch (131); and
the fastening member (200) is fitted with the clamping portion (150) through the accommodating groove (250), so as to be slidably arranged on the clamping portion (150); and the blocking portion (230) is in contact with the clamping portion (150).

7. The rope fastener according to claim 5 or 6, wherein two sliding rails (132) are formed on a wall surface of the top (130) located outside the sliding channel (160), and the two sliding rails (132) are respectively arranged on two sides of the linear notch (131); and
two sliding grooves (241) are formed on a bottom surface of the push cover (240); the two sliding grooves (241) are respectively formed at two sides of the base (210); and the sliding grooves (241) correspond one-to-one to the sliding rails (132), and the sliding rails (132) are relatively slidably arranged in the sliding grooves (241).

8. The rope fastener according to claim 5 or 6, wherein two tenons (133) are further formed on the wall surface of the top (130) located outside the sliding channel (160); and the two tenons (133) are respectively arranged on the two sides of the linear notch (131); and
two fastening positions (242) are provided on the push cover (240); the two fastening positions (242) are arranged respectively on the two sides of the base (210); and the fastening positions (242) correspond one-to-one to the tenons (133), and the tenons (133) are detachably fastened at the corresponding fastening positions (242).
